# EUROPEAN PATENT APPLICATION

(11) **EP 1 061 016 A1**
(43) Date of publication of application: **20.12.2000**
(21) Application number: 00111600.3
(22) Date of filing: 31.05.2000
(51) Int. Cl.: B65G 23/44, B65G 45/10

(54) **Chain tension adjustment device and chip conveyor equipped therewith**

(30) Priority: 18.06.1999 JP 17234699
(71) Applicant: Bunri Industries, Ltd., Kitamorikata-gun, Miyazaki (JP)
(72) Inventor: Tashiro, Minoru, Tokyo (JP); Tashiro, Makoto, Tokyo (JP)
(74) Representative: TER MEER STEINMEISTER & PARTNER GbR

(57) **Abstract**

The chip treatment device 100 comprises a housing 110, and a chain 130 having scraper unit 134 equipped in the housing 110, and conveys chip from a chip entrance 122 to an exit 124. A driving sprocket 140 for the chain is driven by a driving shaft 142. A chain tension adjustment device 200 provided near the driving sprocket 140 has a nut 220 fixed to the housing 110, and a bolt 230 screwed onto the nut 220. A pressurizing plate 210 provided to the tip of the bolt 230 presses the chain, and thereby regulates tension.

## Description

### FIELD OF THE INVENTION

The present invention relates to a chain tension adjustment device, and a chip treatment device for conveying swarfs (so-called chips), which are discharged from a machine tool equipped with the adjustment device, filtering the cutting fluid contained in chips, and collecting said chips.

### DESCRIPTION OF THE RELATED ART

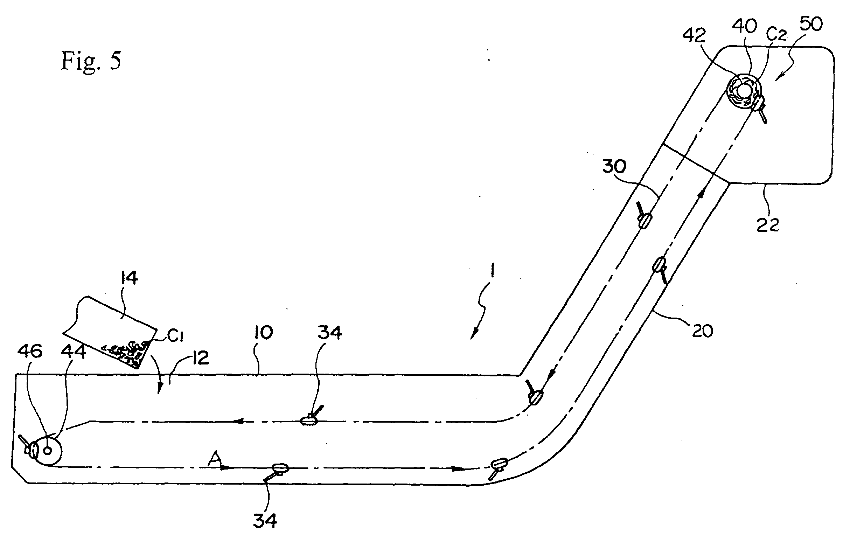

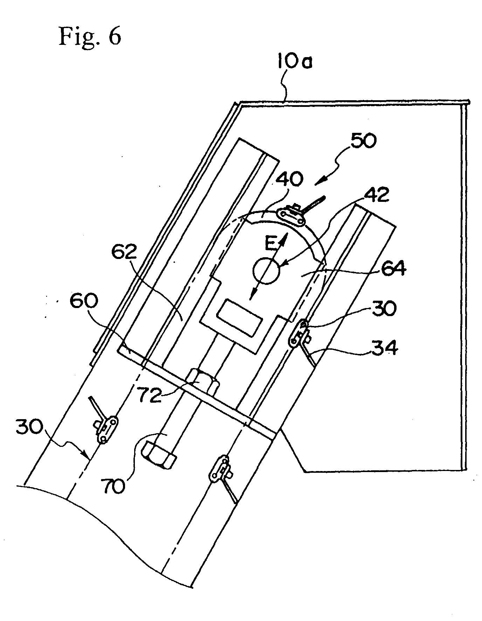

FIG. 5 is an explanatory view showing the outline of the conventional chip treatment device, and FIG. 6 is an enlarged detailed view showing the main portion of FIG. 5.

The chip treatment device denoted as a whole by reference number 1 has a box-shaped housing 10 provided in the horizontal orientation and a sloped portion 20 rising slantwise from one end portion of the body 10.

On the other end of the housing 10 opposing the sloped portion 20 is a chip entrance 12 for receiving the chips C₁ discharged from the machine tool via a conveyance device 14.

On the upper portion of the sloped portion 20 is provided a chip exit 22 for discharging chips after separating water-soluble or unctuous cutting fluid therefrom.

Near the upper end of the sloped portion 20 is provided a driving shaft 42 supported by both side walls of the sloped portion 20, and a pair of sprockets 40 is fixed to the driving shaft.

A shaft 46 is provided near the chip entrance 12 of the housing 10, and a pair of driven sprockets 44 is supported to the shaft 46.

Plate-type chain guides are provided to both side walls of the housing 10 and the sloped portion 20, which guide a pair of chains 30 along a trajectory as shown in the drawings.

Scrapers 34 are fixed to the chains 30 with suitable intervals for conveying the chips.

The driving shaft 42 drives the chains 30 in the direction of arrow A through the driving sprocket 40.

As shown in FIG. 6, a base plate 60 is fixed near the peak portion 10a of the housing 10, and a guide rail 62 is supported by the base plate 60. A take-up unit 64 is slidably mounted to the guide rail 62.

The take-up unit 64 supports the driving shaft 42 rotatably, and a sprocket 40 is mounted to the driving shaft 42. A chain 30 is engaged to the sprocket 40.

A nut 72 is fixed to the base plate 60, and a tension adjusting bolt 70 is screwed onto the nut 72. The end portion of the tension adjusting bolt is connected to the take-up unit 64.

Therefore, by rotating the tension adjusting bolt 70, the take-up unit 64 moves in the direction of arrow E along with the movement of the bolt, and the tension provided to the chain 30 could be adjusted.

### SUMMARY OF THE INVENTION

The conventional chain tension adjustment device 50 had such complex structure as mentioned above.

Further, the strip-shaped chips C₂ conveyed by the chains 30 failed to discharge from the exit 22, and tangled to the driving shaft 42. This caused malfunction of the device.

Therefore, the present invention aims to improve the chain tension adjustment device, and to provide a chip treatment device with means to prevent the tangling of chip to the driving shaft.

The chain tension adjustment device according to the present invention is equipped to a conveyance device having a driving sprocket, a driven sprocket, and a chain stretched between the driving sprocket and the driven sprocket, and comprises a pressurizing plate provided near the driving sprocket for pressing the chain being sent out from the driving sprocket towards the chain being pulled in to the driving sprocket, and a position adjusting means for the pressurizing plate.

Also, the chip treatment unit comprises a housing, and a chain provided inside the housing and equipped with a scraper unit for conveying the cutting chip provided near the driving sprocket. The chip treatment device is equipped with a pressurizing plate provided near the driving sprocket for the chain being sent out from the driving sprocket towards the chain being pulled in to the driving sprocket, and a position adjusting means for the pressurizing plate.

Moreover, it is equipped with a device for preventing tangling of the chips, which is equipped to the outer peripheral of a driving shaft, to both sides thereof is provided a pair of driving sprockets.

The device for preventing tangling of the chips comprises a cylindrical member loosely fit to the outer peripheral of the driving shaft, and a weight fixed to the outer peripheral of the cylindrical member.

### BRIEF DESCRIPTION OF THE DRAWINGS

FIG. 1 is an explanatory view of the chip treatment device of the present invention;
FIG. 2 is an explanatory view of the chain tension adjustment device of the present invention;
FIG. 3 is an explanatory view of the tangling prevention device of the present invention;
FIG. 4 is an explanatory view of the tangling prevention device of the present invention;
FIG. 5 is an explanatory view of the conventional chip treatment device; and
FIG. 6 is an explanatory view of the conventional chain tension adjustment device.

### DETAILED DESCRIPTION OF PREFERRED EMBODIMENTS

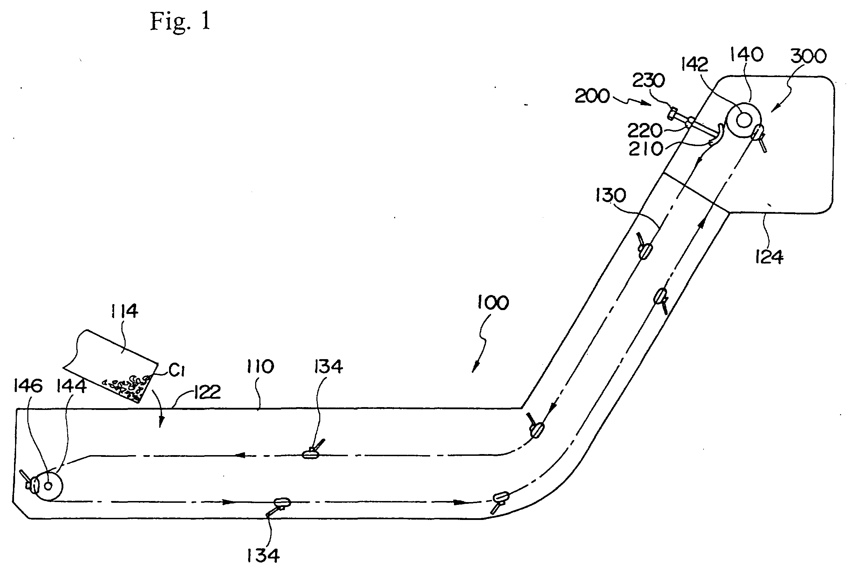

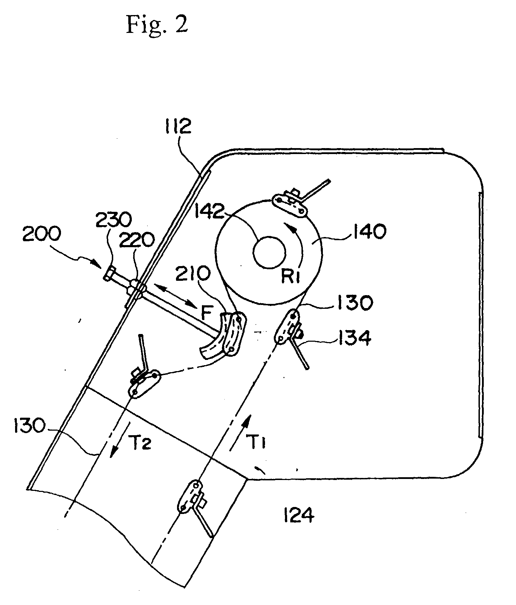

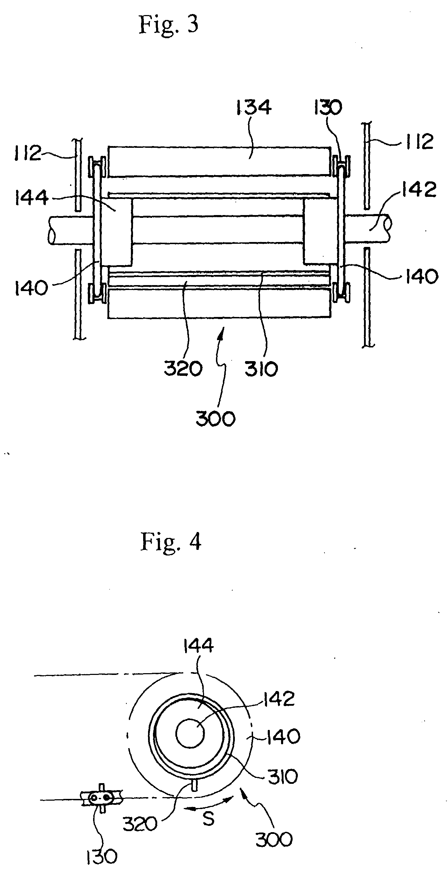

FIG. 1 is an explanatory view showing the overall structure of the chip treatment device according to the present invention, FIG. 2 is an explanatory view of the chain tension adjustment device, and FIGS. 3 and 4 are explanatory views of the device for preventing tangling of the chips.

The chip treatment device shown as a whole by reference number 100 comprises a housing 110, to one end of which is provided an entrance 122 for chips C₁ fed through a conveyance device 114 from the machine tool, and an exit 124 for the chips.

A running path for chains 130 is formed inside the housing 110, and the chains 130 equipped with scraper units 134 travel along the guide mechanism.

A sprocket 140 driven by a driving shaft 142 is provided near the chip exit 124 of the housing 110, and a driven sprocket 144 of the chain 130 is provided rotatably by the driven shaft 146 near the chip entrance 122 of the housing 110. According to another example, a fixed disk may be used to guide the chain 130 instead of the driven sprocket 144.

A chain tension adjustment device of the present invention is equipped near the drive shaft 142.

The chain tension adjustment device has a nut 220 fixed on an upper panel 112 of the housing, and an adjusting bolt 230 screwed onto the nut 220.

A pressurizing plate 210 for the chain is fixed to the tip portion of the adjusting bolt 230. The pressurizing plate 210 for the chain is a plate for pressing the central portion of the chain 130, which has a curved guide surface for slidably guiding the chain 130 smoothly.

By rotating the adjustment bolt 230 and moving it toward the direction of arrow F, the tension provided by the pressurizing plate 210 to the chain 130 could easily be adjusted.

By pressing in the pressurizing plate 210, the engagement angle becomes larger, and the engagement between the chain and the sprocket becomes stronger.

Therefore, problems such as skipping of gear teeth of the sprocket wheel caused by the tension provided to the chain could be prevented.

The driving sprocket 140 rotates in the direction of arrow R₁ and drives the chain 130. The tension T₁ of the chain 130 being pulled in by the driving sprocket 140 is larger than the tension T₂ of the chain being sent out. Therefore, by providing the chain tension adjustment device 200 to the chain 130 being sent out by the driving sprocket 140, the operation is simplified.

FIGS. 3 and 4 are explanatory views showing the structure of a device 300 for preventing tangling of the chips placed on the outer peripheral of the driving shaft 142.

The device 300 for preventing tangling of the chips is placed inside a pair of sprockets 140 mounted to the driving shaft 142. The device is equipped with a cylindrical member 310 loosely fit to a flange 144, and a weight 320 fixed to the outer side of the cylindrical member 310.

That is, the cylindrical member 310 is supported by the flange 144 of the driving shaft 142, but a sufficient gap is provided between the outer diameter of the flange 144 and the inner diameter of the cylindrical member 310.

The driving shaft 142 rotates continuously in the direction of arrow R₁ and conveys the chain 130. The cylindrical member 310 also tries to rotate along with the driving shaft 142. However, since the cylindrical member 310 is loosely fit between the flange 144 of the driving shaft 142, and the center of gravity is eccentric due to the weight 320, it does not rotate together at flange 144, but carries out an oscillating movement S.

This function of the cylindrical member 310 prevents the chip being conveyed by the scraper unit of the chain 130 from tangling to the driving shaft 142. The chips pass through the driving sprocket 140, and are conveyed again toward the exit.

The chain tension adjustment device of the present invention enables, as is mentioned above, to adjust the tension of the chain in the conveyance device with a simple structure.

Moreover, since the angle of the chain wound to the driving sprocket of the chain may be set to a large value, problems related to the chain skipping the gear teeth of the sprocket could be prevented.

The chip treatment device equipped with the chain tension adjustment device employs a simple structure, and since the device is further provided with a device for preventing tangling of the chips to the driving shaft, malfunction caused by tangling of chip could be prevented.

## Claims

1. A chain tension adjustment device equipped to a conveyance device having a driving sprocket, a driven sprocket, and a chain stretched between said driving sprocket and said driven sprocket,
wherein said chain tension adjustment device is equipped with a pressurizing plate provided near said driving sprocket for pressing the chain being sent out from the driving sprocket towards the chain being pulled in to the driving sprocket, and a position adjusting means for said pressurizing plate.

2. A chip treatment device equipped with the chain tension adjustment device according to claim 1,
wherein said chip treatment device comprises a housing, and a chain provided inside said housing and equipped with a scraper unit for conveying the chip.

3. A chip treatment device according to claim 2, wherein a device for preventing tangling of the chips is equipped to the outer peripheral of a driving shaft, to both sides thereof is provided a pair of driving sprockets.

4. A chip treatment device according to claim 3, wherein said device for preventing tangling of the chips comprises a cylindrical member loosely fit to the outer peripheral of said driving shaft, and a weight fixed to the outer peripheral of said cylindrical member.
